Europäisches Patentamt

European Patent Office

Office européen des brevets

(19)

(11) Publication number: **0 133 528**
**B1**

(12) **EUROPEAN PATENT SPECIFICATION**

(45) Date of publication of patent specification: **02.11.88**

(51) Int. Cl.⁴: **B 60 J 1/17**

(21) Application number: **84109012.9**

(22) Date of filing: **30.07.84**

(54) Construction of door in motor vehicle.

(30) Priority: **29.07.83 JP 119489/83 u**

(43) Date of publication of application:
**27.02.85 Bulletin 85/09**

(45) Publication of the grant of the patent:
**02.11.88 Bulletin 88/44**

(84) Designated Contracting States:
**DE FR GB**

(56) References cited:
**DE-A-2 827 372**
**DE-A-2 924 309**
**DE-B-2 809 721**
**GB-A-2 133 448**

(73) Proprietor: **TOYOTA JIDOSHA KABUSHIKI KAISHA**
**1, Toyota-cho Toyota-shi**
**Aichi-ken 471 (JP)**

(72) Inventor: **Watanabe, Hiroyuki**
**TOYOTA JIDOSHA KABUSHIKI KAISHA 1,**
**Toyota-cho**
**Toyota-shi Aichi-ken (JP)**
Inventor: **Hamada, Eiichi**
**TOYOTA JIDOSHA KABUSHIKI KAISHA 1,**
**Toyota-cho**
**Toyota-shi Aichi-ken (JP)**
Inventor: **Hayashi, Motomu**
**TOYOTA JIDOSHA KABUSHIKI KAISHA 1,**
**Toyota-cho**
**Toyota-shi Aichi-ken (JP)**
Inventor: **Ono, Kenji**
**TOYOTA JIDOSHA KABUSHIKI KAISHA 1,**
**Toyota-cho**
**Toyota-shi Aichi-ken (JP)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Bavariaring 4**
**D-8000 München 2 (DE)**

Courier Press, Leamington Spa, England.

## Description

The invention relates to a construction of a door in a motor vehicle of a type known, for example, from DE—A—2827372 and having a door mirror mounted to a triangular portion at the forward end of the window opening, as defined in the preamble of claim 1.

The air resistance in value during running of a motor vehicle at high speed may reach more than twice the rolling resistance in value.

In view of the above, there has been proposed a so-called flush surface type motor vehicle in which the surfaces of a vehicle body including the surfaces of door glasses are flush with one another so as to reduce the air resistance.

A door in the flush surface type motor vehicle of the type described should be constructed such that the outer surface of a door glass and the outer surface of a door frame are substantially flush with each other in the fully closed state of the door glass. However, such disadvantages are presented that the door glass is sucked outwardly due to a difference in pressure between the interior and the exterior of a compartment during running of the motor vehicle at high speed and, when the door glass floats up outwardly from the outer surface of a door, so-called wind breaking sounds occur and the air resistance during running is increased.

To obviate the above-described disadvantages, as described in DE—A—2827372, there is proposed a construction of a door in a motor vehicle, wherein sliders each having a forward end sliding portion projected into a compartment are secured to end portions of a door glass, and the sliding portion of the sliders are slidably guided by guides on a door frame in directions of opening and closing of the door glass, so that the outer surfaces of the door glass and the door frame can be substantially flush with each other.

A suitable number of the above-described sliders are secured to a forward end and a rear end of the door glass, and guide channels for restraining the door glass in a direction of the thickness of the door glass in via the slider and slidably guiding the door glass in directions of opening and closing of the door glass are secured to the forward and rear ends of the door frame in parallel to each other.

The above-described construction of the door in a motor vehicle can reliably guide the door glass while holding the surfaces of the door glass and the outer surface of the vehicle body flush with each other, however, presents such a disadvantage that the sliders mounted to the interior of the door glass and bolts and the like for securing the sliders to the door glass are observed from outside of the vehicle body, to thereby deteriorate the appearance.

Further, there is presented such a disadvantage that, in the fully opened state of the door glass, glass guide channels for guiding the door glass and sliders provided at the top ends of the door glass are observed.

Recently, a door mirror has been mounted to the outer surface of a triangular portion at the forward end of an window opening of the side door. However, in this construction of the door, in which the door mirror is mounted, a guide at a forward end portion of the door glass is normally disposed rearwardly of the door mirror, whereby an indirect field of vision through the door mirror is narrowed by the guide.

It is therefore the primary object of the present invention to provide a construction of a door in a motor vehicle, wherein a slider and a glass guide channel at the forward end portion of the door glass are made invisible to improve the appearance, and the indirect field of vision through a door mirror is not narrowed by the glass guide channel.

According to the invention this object is achieved by the measures specified in claim 1 and relates to a construction of a door in a motor vehicle, a door frame is provided with a window opening in which a door glass is slidably mounted by means of forward and rear sliders each having a sliding portion projected inwardly into a door compartment, and being slidably guided by guide channels on the door frame in directions of opening and closing of the door glass, whereby the outer surfaces of the door glass and the door frame are substantially flush with each other, and a door mirror is mounted to a triangular portion at a forward end of the window opening, characterized in that the forward slider is provided at the top end position in the forward portion of the door glass and in that the forward guide channel for guiding said forward slider at the top end position in the forward portion of the door glass is disposed at a position of said door mirror on the side of the door compartment and along the rear end edge of said door mirror. Thus, in such a construction, the slider and guide channel in the forward position of the door glass are concealed behind the door mirror, so that the appearance is improved and the field of vision through the door mirror can avoid being narrowed by the guide channel.

Further features of a particular embodiment of the invention, as described in details below, are specified in the dependent claims.

Description will hereunder be given of one embodiment of the present invention with reference to the drawings.

Fig. 1 is a side view showing an embodiment of the construction of a door in a motor vehicle according to the present invention; and

Fig. 2 is an enlarged sectional view taken along the line II—II in Fig. 1.

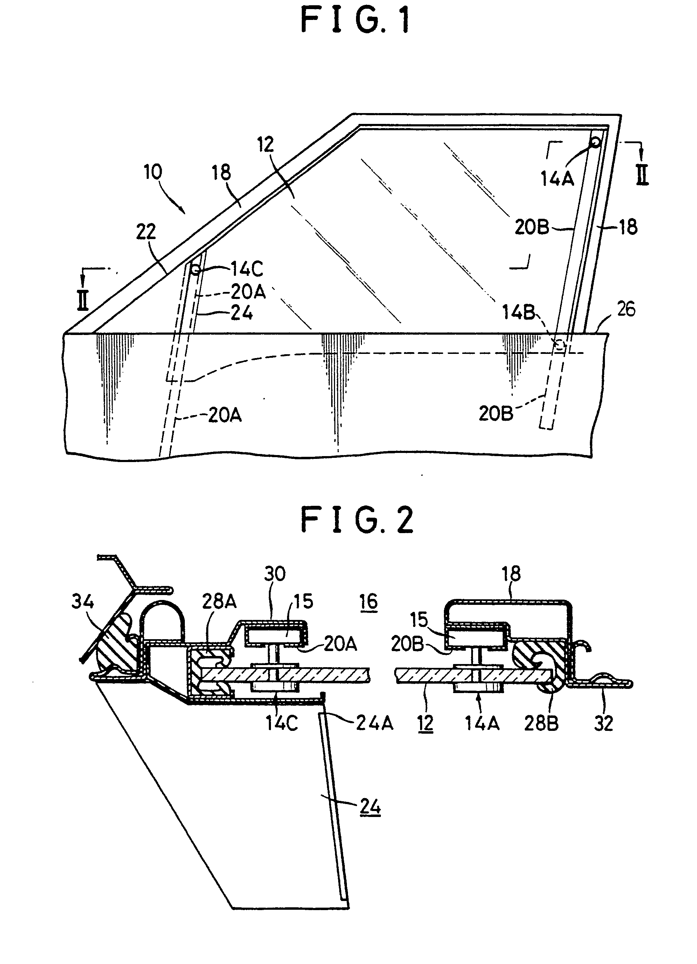

As shown in Figs. 1 and 2, according to this embodiment, in a construction of a side door so in a motor vehicle, wherein a door frame 18 is provided with a window opening in which a door glass 12 is slidably mounted by means of sliders 14A, 14B, 14C each having a sliding portion 15 projected into a door compartment 16 are secured to end portions of the door glass 12 in the side door 10, and the sliding portions 15 are slidably guided by guide channels 20A, 20B on a door frame 18 in directions of opening and closing of the door glass 12, whereby the outer surfaces of the door glass 12 and the door frame 18 are substantially flush with each other, and a door mirror 24 is mounted to a triangular portion 22 at a forward end of a window opening, three sliders 14A, 14B, 14C are provided which include a rear top end slider 14A provided at a top end position in a rear portion of the door glass 12, a rear bottom end slider 14B provided at a bottom end position in the rear portion of the door glass 12, which becomes lower than a door beltline 26 in the fully closed state of the door glass 12 and a forward slider 14C provided at a top end position in a forward portion of the door glass 12, and a forward guide channel 20A for guiding the slider 14C provided at the top end position in the forward portion of the door glass 12 is disposed at a position of a door mirror 24 on the side of the door compartment 16 and along the rear end edge 24A of the door mirror 24.

More specifically, the forward guide channel 20A is vertically extended through the triangular portion 22 provided at the forward end of the window opening to the interior of a door panel, and a portion of the guide channel 20A projected more upwardly than the door beltline 26 is concealed behind the door mirror 24 on the side of the door compartment 16.

In Fig. 2, a rear guide channel 20B is extending along the rear portion of the door frame 18 to the interior of the door panel, for guiding the rear top end slider 14A secured to the rear end of the door glass 12 and the rear bottom end slider 14B. A forward and a rear door glass weather strip 28A and 28B are in sliding contact with the forward end edge and rear end edge of the door glass 12, respectively, for sealing spaces formed between the door frame 18 and the door glass 12. A bracket 30 connects the forward guide channel 20A to the door frame 18, and a door weather strip 34 is provided for sealing a space formed between the side door 10 and the outer surface 32 of the vehicle body.

The forward door glass weather strip 28A is formed into a substantially U-shape in section so as to evenly contact the inner and outer surface of the forward end edge of the door glass 12.

The rear door glass weather strip 28B is formed into a substantially L-shape in section so as to mainly contact the inner surface of the door glass 12.

This embodiment is of the arrangement that the sliders 14A, 14B, 14C secured to the door glass 12 include the forward slider 14C provided at the top end portion in the forward portion of the door glass 12, the rear top end slider 14A provided at the top end position in the rear portion of the door glass 12 and the rear bottom end slider 14B provided at the bottom end position in the rear portion of the door glass 12, the rear bottom end slider 14B is to be disposed at the position lower than the door beltline 26 in the fully closed state of the door glass 12, and the forward guide channel 20A for guiding the forward slider 14C is disposed at the position of the door mirror 24 on the side of the door compartment 16 and along the rear end edge 24A of the door mirror 24, whereby only the rear top end slider 14B can be observed from outside and the forward guide channel 20A is constantly concealed behind the door mirror 24, so that the appearance can be improved and the indirect field of vision through the door mirror 24 can avoid being narrowed by the forward guide channel 20A.

Furthermore, in this embodiment, the forward door glass weather strip 28A is disposed in such a space inwardly of the door mirror 24 that, even if the door glass weather strip 28A protrudes outwardly from the outer surface of the door glass 12, it does not hinder the flush surface, whereby as the forward door glass weather strip 28A, a weather strip of a U-shape in section, being large in contact area contacting the door glass 12 is provided, differing from the case of the rear door glass weather strip 28B, so that reliable sealing can be achieved.

Additionally, the above-described embodiment is of the arrangement that the door glass weather strips 28A and 28B effect sealing by directly contacting the forward end edge and rear end edge of the door glass 12, however, the present invention need not necessarily be limited to this, and, such an arrangement although not shown in the drawings, may be adopted that, for example, door glass pieces each being of a substantially crank shape in section and having an end offset into the door compartment are secured to an end portion of the door glass 12 and the door glass pieces are brought into sliding contact with the door glass weather strips 28A and 28B.

**Claims**

1. A construction of a door in a motor vehicle, wherein a door frame (18) is provided with a window opening in which a door glass (12) is slidably mounted by means of forward and rear sliders (14A, 14B, 14C) having each a slider portion (15) projected inwardly into a door compartment (16) and being slidably guided by guide channels (20A, 20B) on the door frame (18) in directions of opening and closing of the door glass (12), whereby the outer surfaces of the door glass (12) and the door frame (18) are substantially flush with each other, a door mirror (24) being mounted to a triangular portion (22) at the forward end of the window opening, characterised in that the forward slider (14C) is provided at the top end position in the forward portion of the door glass (12) and in that the forward guide channel (20A) for guiding said forward slider (14C) at the top end position in the forward portion of the door glass (12) is disposed at a position of the door mirror (24) on the side of the door compartment (16) and along the rear end edge (24A) of the door mirror (24).

2. A construction of a door in a motor vehicle as set forth in claim 1, wherein said sliders include a rear top end slider (14A) provided at a top end position in a rear portion of the door glass (12), a rear bottom end slider (14B) provided at a rear bottom end position in the rear portion of the door glass (12) which becomes lower than a door beltline (26) in the fully closed state of the door glass (12).

3. A construction of a door in a motor vehicle as set forth in claim 1 or 2, wherein said forward guide channel (20A) is vertically extended through the triangular portion (22) provided at the forward end of the window opening to the interior of the door panel, and a portion of said forward guide channel (20A) projected more upwardly than the door beltline (26) is concealed behind the door mirror (24) on the side of the door compartment (16).

4. A construction of a door in a motor vehicle as set forth in claim 1, 2 or 3, wherein a forward door glass weather strip (28A) brought into contact with the forward end edge of the door glass (12) to seal a space formed between the door frame (18) and the forward end of the door glass (12) is formed into a substantially U-shape in section so as to evenly contact the inner and outer surface of the forward end edge of the door glass (12).

5. A construction of a door in a motor vehicle as set forth in claim 1, 2, 3 or 4, wherein a rear door glass weather strip (28B) brought into contact with the rear end edge of the door glass (12) to seal a space formed between the door frame (18) and the rear end of the door glass (12) is formed into a substantially L-shape in section so as to mainly contact the inner surface of the door glass (12).

6. A construction of a door in a motor vehicle as set forth in claims 1 to 5, wherein door glass pieces each being of a substantially crank shape and having an end offset into the door compartment (16) are secured to end portions of the door glass (12), and said door glass pieces are brought into sliding contact with said forward and rear door glass weather strips (28A, 28B).

## Patentansprüche

1. Türkonstruktion in einem Kraftfahrzeug, wobei ein Türrahmen (18) mit einer Fensteröffnung versehen ist, in der eine Türscheibe (12) durch vordere sowie hintere Gleitelemente (14A, 14B, 14C), von denen jedes ein einwärts in einen Tür-Innenraum (16) ragendes und durch Führungsprofile (20A, 20B) am Türrahmen (18) verschiebbar in Richtungen eines Öffnens und Schließens der Türscheibe (12) gleitend geführtes Gleitstück (15) aufweist, verschiebbar gehalten ist, wobei die Außenflächen der Türscheibe (12) sowie des Türrahmens (18) im wesentlichen miteinander bündig sind und wobei ein Tür-Außenspiegel (24) an einem Dreieckteil (22) am vorderen Ende der Fensteröffnung befestigt ist, dadurch gekennzeichnet, daß das vordere Gleitelement (14C) an der oberen Endposition im vorderen Teil der Türscheibe (12) vorgesehen ist und daß das vordere Führungsprofil (20A) zur Führung des vorderen Gleitelements (14C) an der oberen Endposition im vorderen Teil der Türscheibe (12) am Ort des Tür-Außenspiegels (24) auf der Seite des Tür-Innenraumes (16) und längs der hinteren Endkante (24A) des Tür-Außenspiegels (24) angeordnet ist.

2. Türkonstruktion in einem Kraftfahrzeug nach Anspruch 1, dadurch gekennzeichnet, daß die Gleitelemente ein hinteres, oberes Gleitelement (14A), das an einer oberen Endposition in einem hinteren Teil der Türscheibe (12) angeordnet ist, und ein hinteres, unteres Gleitelement (14B), das an einer hinteren, unteren Endposition, welche im völlig geschlossenen Zustand der Türscheibe (12) eine gegenüber der mittleren Trennlinie (26) der Tür zur Scheibe niedrigere Lage einnimmt, im hinteren Teil der Türscheibe (12) angeordnet ist, umfassen.

3. Türkonstruktion in einem Kraftfahrzeug nach Anspruch 1 oder 2, dadurch gekennzeichnet, daß sich das vordere Führungsprofil (20A) vertikal durch das am vorderen Ende der Türöffnung befindliche Dreieckteil (22) zum Inneren der Türverkleidung erstreckt und ein Teil des vorderen Führungsprofils (20A), der über die mittlere Trennlinie (26) der Tür zur Scheibe aufwärts vorragt, hinter dem Tür-Außenspiegel (24) auf der Seite des Tür-Innenraumes (16) verborgen ist.

4. Türkonstruktion in einem Kraftfahrzeug nach Anspruch 1, 2 oder 3, dadurch gekennzeichnet, daß ein vorderer Türscheiben-Dichtungsstreifen (28A), der mit der vorderen Endkante der Türscheibe (12) zur Abdichtung eines zwischen dem Türrahmen (18) sowie dem vorderen Ende der Türscheibe (12) gebildeten Raumes in Anlage ist, im Querschnitt im wesentlichen U-förmig ausgestaltet ist, um an der Innen-sowie Außenfläche der vorderen Endkante der Türscheibe (12) gleichmäßig anzuliegen.

5. Türkonstruktion in einem Kraftfahrzeug nach Anspruch 1, 2, 3 oder 4, dadurch gekennzeichnet, daß ein hinterer Türscheiben-Dichtungsstreifen (28B), der mit der hinteren Endkante der Türscheibe (12) zur Abdichtung eines zwischen dem Türrahmen (18) sowie dem hinteren Ende der Türscheibe (12) gebildeten Raumes in Anlage ist, im Querschnitt im wesentlichen L-förmig ausgestaltet ist, um in der Hauptsache an der Innenfläche der Türscheibe (12) anzuliegen.

6. Türkonstruktion in einem Kraftfahrzeug nach einem der Ansprüche 1 bis 5, dadurch gekennzeichnet, daß Türscheibenteile, von denen jedes im wesentlichen kurbelförmig ausgestaltet ist und ein in den Tür-Innenraum (16) abgekröpftes Ende hat, an den Endteilen der Türscheibe (12) befestigt sind und daß diese Türscheibenteile mit dem vorderen sowie hinteren Türscheiben-Dichtungsstreifen (28A, 28B) in Gleitanlage gebracht sind.

## Revendications

1. Une structure de porte pour un véhicule automobile, dans laquelle un cadre de porte (18) est pourvu d'une ouverture de fenêtre, dans laquelle une vitre de porte (12) susceptible de coulisser est montée au moyen de coulisseaux avant et arrière (14A, 14B, 14C) comportant chacun une partie coulissante (15) faisant saillie vers l'intérieur dans un compartiment de porte (16) et étant guidés en coulissement par des canaux de guidage (20A, 20B) sur le cadre de porte (18) dans les directions d'ouverture et de fermeture de la vitre de porte (12), grâce à quoi les surfaces extérieures de la vitre de porte (12) et du cadre de porte (18) affleurent sensiblement l'une avec l'autre, un miroir de porte (24) étant monté sur une partie triangulaire 22 à l'extrémité avant de l'ouverture de fenêtre, caractérisée en ce que le coulisseau avant (14C) est disposé à la position extrême supérieure dans la partie avant de la vitre de porte (12) et en ce que le canal de guidage avant (20A) pour guider ledit coulisseau avant (14C) à la position extrême supérieure dans la partie avant de la vitre de porte (12) est disposé à une position du miroir de porte (24) sur le côté du compartiment de porte (16) et le long de l'arête arrière extrême (24A) du miroir de porte (24).

2. Une structure de porte pour un véhicule automobile selon la revendication 1, dans laquelle lesdits coulisseaux comportent un coulisseau extrême arrière supérieur (14A) disposé à une position supérieure extrême dans une partie arrière de la vitre de porte 12, un coulisseau extrême arrière inférieur (14B) disposé à la position extrême arrière inférieure dans la partie arrière de la vitre de porte (12) qui dans l'état complètement fermé de la vitre de porte (12) vient se situer plus bas qu'une ligne de ceinture (26) de la porte.

3. Une structure de porte pour un véhicule automobile selon la revendication 1 ou 2, dans laquelle ledit canal de guidage avant (20A) s'étend verticalement à travers la partie triangulaire (22) disposée à l'extrémité avant de l'ouverture de fenêtre vers l'intérieur du panneau de porte, et une partie dudit canal de guidage avant (20A) qui fait saillie plus haut que la ligne de ceinture de porte (26) et cachée derrière le miroir de porte (24) sur le côté du compartiment de porte (16).

4. Une structure de porte pour un véhicule automobile selon la revendication 1, 2 ou 3, dans laquelle un joint d'étanchéité avant (28A) de vitre de porte amené en contact avec l'arête avant extrême de la vitre de porte (12) pour rendre étanche un espace formé entre le cadre de porte (18) et l'extrémité avant de la vitre de porte (12) présente sensiblement en coupe une forme en U de façon à réaliser un contact uniforme avec les surfaces intérieure et extérieure de l'arête extrême avant de la vitre de porte (12).

5. Une structure de porte pour un véhicule automobile selon la revendication 1, 2, 3 ou 4, dans laquelle un joint d'étanchéité arrière (28B) de vitre de porte amené en contact avec l'arête extrême arrière de la vitre de porte (12) pour rendre étanche un espace formé entre le cadre de porte (18) et l'extrémité arrière de la vitre de porte (12) présente sensiblement en coupe une forme en L de façon à réaliser principalement un contact avec la surface intérieure de la vitre de porte (12).

6. Une structure de porte pour un véhicule automobile selon l'une des revendications 1 à 5, dans laquelle des pièces de vitre de porte présentant chacune sensiblement une forme en forme de L (de manivelle) et comportant une extrémité décalée dans le compartiment de porte (16) sont fixées aux parties extrêmes de la vitre de porte (12), et lesdites pièces de vitre de porte sont amenées en contact coulissant avec lesdits joints d'étanchéité (28A, 28B) avant et arrière de vitre de porte.

# F I G. 1

# F I G. 2